# EUROPEAN PATENT APPLICATION

(11) **EP 3 099 057 A1**
(43) Date of publication of application: **30.11.2016**
(21) Application number: 15465516.1
(22) Date of filing: 26.05.2015
(51) Int. Cl.: H04N 5/232, H04N 13/02, G06T 7/00

(54) **IMAGE CAPTURING APPARATUS AND IMAGE CAPTURING METHOD**

(71) Applicant: Continental Automotive GmbH, 30165 Hannover (DE)
(72) Inventor: Botusescu, Adrian, 300584 Timisoara (RO); Dragan, Cristina-Mihaela, 300145 Timisoara (RO)
(74) Representative: Bobbert, Christiana

(57) **Abstract**

The present invention provides an image capturing method and apparatus. Image data are captured by means of a plurality of image retrieving modules covering different fields of view. The image data of the individual image retrieving modules are merged by analyzing the overlapping portions of the individual fields of view. In this way, a reliable and efficient merging of image data can be performed in order to obtain a single image covering an extended field of view.

## Description

The present invention relates to an image capturing apparatus and an image capturing method. In particular, the present invention relates to an image capturing apparatus and method for obtaining images having an enlarged field of view.

### Prior art

Modern vehicles such as cars may comprise a plurality of cameras. The image data of these cameras may be provided to the driver by means of a monitor. Further, the image data of these cameras may be analyzed by an advanced driver assistance system (ADAS). However, the field of view of a camera is limited, inter alia, by the lenses of the camera. With normal optics, conventional cameras used in an ADAS usually have a horizontal field of view between 36 and 53 degrees.

One possibility to increase the field of view of a camera is to use a special optic, for instance a fisheye optic. However, a camera having a fisheye optic usually outputs distorted images. Thus, an additional complicated image processing step has to be performed in order to correct these distortions.

Hence, there is a need for an efficient image capturing apparatus and an image capturing method for obtaining undistorted images in an extended field of view. In particular, there is need for an image capturing apparatus and a method for obtaining images of an extended field of view which can be directly used for a further processing or displaying.

### Disclosure of the invention

According to a first aspect, the present invention provides an image capturing apparatus with the features of independent claim 1.

According to this first aspect, an image capturing apparatus is provided. The image capturing apparatus comprises a first image retrieving module and a second image retrieving module. The first image retrieving module is adapted to provide first image data in a first field of view. The second image retrieving module is adapted to provide second image data in a second field of view. The second field of view is different from the first field of view. Further, the first field of view and the second field of view are partially overlapping in an overlapping segment. The image capturing apparatus further may comprise a merging unit. The merging unit is adapted to determine an orientation of the second image retrieving module with respect to the first image retrieving module. The determination of the orientation is performed based on the captured first image data and the captured second image data. In particular, the determination of the orientation is performed based on the image data in the overlapping segment. Based on the determined orientation of the second image retrieving module with respect to a first image retrieving module, the merging may merge the capture first image data and the captured second image data to obtain image data of a common image.

According to a second aspect, an image capturing method according to independent claim 8 is provided.

According to the second aspect, an image capturing method is provided, comprising the steps of capturing first image data having a first field of view by a first image retrieving module; capturing second image data having a second field of view by a second image retrieving module, wherein the second field of view is different from the first field of view, and the first field of view and the second field of view are partially overlapping in an overlapping segment; determining an orientation of the second image retrieving module with respect to a first image retrieving module based on the captured first image data and the captured second image data in the overlapping segment; and merging the captured first image data and the captured second image data to image data of a common image based on the determined orientation of the second image retrieving module with respect to the first image retrieving module.

An idea underlying the present invention is to combine image data from more than one image retrieving module to a single image. In this way, a single common image can be achieved covering the field of view of all individual image retrieving modules. By analyzing the overlapping segment of the individual fields of view of the respective image retrieving modules, the orientation of the individual image retrieving modules with respect to each other can be automatically identified. The orientation of the image retrieving modules may be understood as the orientation of the respective fields of view. In particular, the orientation of the image retrieving modules may be understood as the orientation of the respective principal axis.

Based on this identified orientation of the individual image retrieving modules, it is possible to perform a reliable and enhanced combination of the image data of the individual image retrieving modules without any manual assistance of a user. Hence, variations in the mounting positions of the image retrieving modules during the manufacturing process or the like can be automatically compensated.

By using image data of a plurality of image retrieving modules and the automatic merging of the individual image data, it is possible to output image data relating to a single image having an enlarged field of view. The output common image data can be used in the same way as a single image provided by a camera. Thus, the image data relating to the single image can be easily processed or displayed without any further computations.

The individual image retrieving modules may have a simple optic (lenses). In particular, an optic may be used which provides image data without any significant distortions due to an extended field of view. Accordingly, it is not necessary to perform additional computations in order to compensate these distortions, for instance caused by a fisheye optic.

According to an embodiment, the field of view of the common image has an angle greater than 90 degrees. In particular, the field of view of the common image may have an angle in at least one direction which may be greater than 120 degrees, 160 degrees or the resulting opening angle of the field of view may be even up to about 180 degrees. In this way, the field of view of the image data provided by the image capturing apparatus can be extended with respect to a conventional monocular camera system.

According to a further embodiment, the merging unit of the image capturing apparatus may further comprise a calibration unit for determining calibration data comprising the orientation of the second image retrieving module with respect to the first image retrieving module; and a memory for storing the determined calibration data. The merging unit may be adapted to merge the first image data and the second image data based on the calibration data stored in the memory. In this way, it is possible to perform an automatic calibration of the image capturing apparatus in advance and to store the required calibration data. Hence, an accelerated processing for merging the image data of the first image retrieving module and the second image retrieving module can be achieved.

According to a further embodiment, the image capturing apparatus may further comprise a device housing. In particular, the first image retrieving module, the second image retrieving module and the merging unit may be arranged in this device housing. In this way, a compact device comprising all elements for capturing image data having an extended field of view can be achieved.

According to a further embodiment, the first image retrieving module and the second image retrieving module may have the same imaging properties. For example, the first and the second image retrieving module may have same opening angles of the field of view. In particular, it may be possible to identical image retrieving modules for the first image retrieving module and the second image retrieving module. In this way, the individual image data provided by the first and the second image retrieving module may be combined in a very easy way.

According to a further aspect, the present invention provides a vehicle comprising an image capturing apparatus according to the present invention. Such a vehicle may be, for instance a car, in particular a passenger car, a van or a truck.

According to a further embodiment, the vehicle may further comprise a display adapted to display the common image which has been created by the merging unit.

According to a further embodiment, the vehicle may comprise an advanced driver assistance system (ADAS). In this case, the common image of the merging unit may be provided to the advanced driver assistance system. Hence, the image data can be used immediately by the ADAS without any further computations.

According to a further embodiment of the image capturing method, the determining step for determining the orientation may comprise the steps of identifying a first feature in the first image data; and identifying a second feature in the second image data. Further, the determining step may comprise a step for matching the first feature and the second feature. In this way, the orientation of the first image retrieving module with respect to the second image retrieving module can be easily determined by an analysis of features in the captured image data.

According to a further embodiment of the image capturing method, the first image retrieving module has a first principal axis and the second image retrieving module has a second principal axis. Further, the step for determining the orientation may comprise a step for determining an angle between the first principal axis and the second principal axis. In this way, the orientation between the first and the second image retrieving module can be easily specified by such a parameter.

According to a further aspect of the image capturing method, the method may further comprise a step for comparing image data of the first image data relating to the overlapping segment with image data relating to the second image data of the overlapping segment. Further, the image capturing method may comprise a step for detecting an abnormality, if the image data of the first image data relating to the overlapping segment do not correspond to the image data relating to the second image data of the overlapping segment. Hence, by determining that the image data provided by the first image retrieving module do not correspond to the respective image data provided by the second image retrieving module, it is possible to identify an error. Hence, the reliability of the provided image data can be enhanced.

Further advantages and embodiments of the present invention may be apparent by the following description in connection with the accompanying drawings, wherein:
- Figure 1:: shows a schematic illustration of an image capturing apparatus according to an embodiment;
- Figure 2:: shows a schematic illustration of an image capturing apparatus according to a further embodiment;
- Figure 3:: shows a schematic illustration of a vehicle comprising an image capturing apparatus according to an embodiment; and
- Figure 4:: shows a flowchart for an image capturing method underlying a further embodiment.

### Description of embodiments

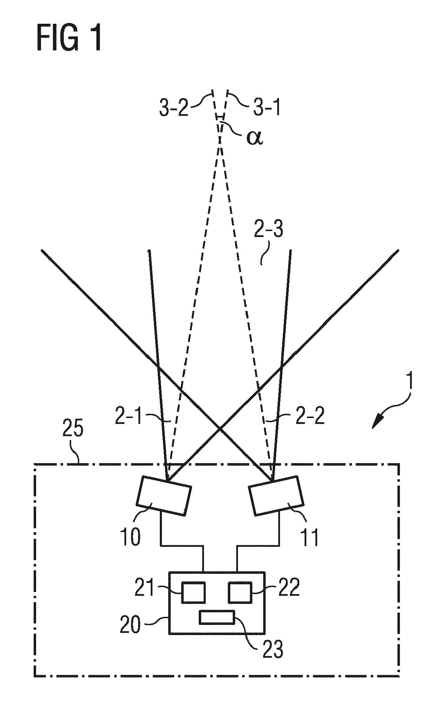

Figure 1 illustrates an embodiment of an image capturing apparatus 1. The image capturing apparatus 1 comprises a first image retrieving module 10 and a second image retrieving module 11. The first image retrieving module 10 and the second image retrieving module 11 are connected with a merging unit 20. The first image retrieving module 10 and the second image retrieving module 11 may have the same structure. In this case, both image retrieving modules may have same optics, imaging sensor, etc. However, it is also possible that the first image retrieving module 10 and the second image retrieving module 11 may have a different structure, or at least different imaging properties. For example, the field of view, in particular the horizontal and/or vertical field of view, the focal distance etc. may be the same or different for each of the image retrieving module 10 and 11.

The first and the second image retrieving module 10, 11 may be an imaging module comprising an image sensor and an optic. For instance, the sensor of the image retrieving module 10 and 11 may be a CCC-sensor (charge-coupled device) or a CMOS-sensor. However, any other imaging sensor may be possible, too. The optic of each image retrieving modules 10 and 11 may comprise one or more lenses for focusing the light on the respective sensor of the image retrieving modules 10 and 11. In this way, the image retrieving modules may convert the incoming light into analogue or digital signals. The analogue or digital signals may be processed in the individual image retrieving modules and finally, each image retrieving module 10 and 11 outputs image data corresponding to an image in the field of view of the respective image retrieving module 10 and 11. Alternatively, the analogue or digital output signals of the sensors in the first and second image retrieving module 10, 11 may be forwarded to merging unit 20. In this case, merging unit 20 may further process the output signals.

First image retrieving module 10 and second image retrieving module 11 may be image retrieving modules for capturing still images. However, it is also possible that the first image retrieving module 10 and the second image retrieving module 11 may provide sequences of images. For instance, the first and the second image retrieving module 10 and 11 may provide image sequences having a predetermined frame rate. It may be also possible, that the frame rate of the image sequence provided by the first and the second image retrieving module can be adapted.

The first image retrieving module 10 may capture image data in the first field of view 2-1. The second image retrieving module may capture image data in a second field of view 2-2. For example, the first field of view 2-1 and the second field of view 2-2 may have an opening angle between 30 and 90 degrees, in particular between 36 and 53 degrees, respectively. Such an opening angle of a field of view 2-1 and 2-2 can be achieved with a conventional optic. In particular, such an optic will cause no or at least very low disturbances when projecting an image area on optical sensors of the image retrieving modules 10 and 11. However, image retrieving module images 10 and 11 having a field of view with a different opening angle may be possible, too.

Even though the present invention is described by means of two image retrieving modules 10 and 11, the present invention is not limited to only two image retrieving modules. It will be also possible to extend the present invention to more than two image retrieving modules 10 and 11.

As can be seen in Figure 1, the principal axis 3-1 of the first image retrieving module 10 and the principal axis 3-2 of the second image retrieving module 11 are not parallel. Moreover, the principal axis of the first and the second image retrieving module 10, 11 form an angle α. Accordingly, an imaging area covered by the first field of view 2-1 of the first image retrieving module 10 is different from the image area covered by the second field of view 2-2 of the second image retrieving module 11. However, the first field of view 2-1 of the first image retrieving module 10 and the second field of view 2-2 of the second image retrieving module 11 overlap in an overlapping section 2-3. Accordingly, the image area of this overlapping section 2-3 is covered by both, the first image retrieving module 10 and the second image retrieving module 11.

The image data captured by the first image retrieving module 10 and the image data captured by the second image retrieving module 11 are provided to merging unit 20. Merging unit 20 may receive the captured image data of the first image retrieving module 10 and the second image retrieving module 11. Further, merging unit 20 may analyze the received first image data and the received second image data in order to determine the orientation of the first image retrieving module 10 and the second image retrieving module 11. In particular, merging unit 20 may determine the orientation of the second image retrieving module 11 with respect to the first image retrieving module 10. In particular, the orientation of an image retrieving unit may be considered as the orientation of the corresponding field of view. For example, the orientation of an image retrieving unit may be specified by the direction of a principal axis.

For this purpose, merging unit 20 may identify at least one feature in the first image data provided by the first image retrieving module 10 and further identify at least one feature in the second image data provided by the second image retrieving module 11. Such a feature may be, for instance an edge, a border between a light and dark area, an element having a particular shape and/or any other significant feature in the first image data and the second image data. If such a feature can be identified in the image data of the overlapping segment 2-3 of the first field of view 2-1 of the first image retrieving module 10 and the second field of view 2-2 of the second image retrieving module 11, it is possible to determine the orientation of the second image retrieving module 11 with respect to the first image retrieving module 10 by matching the identified feature. In order to enhance the reliability of the determined orientation of the first and the second image retrieving module 10 and 11, a plurality of features may be matched in parallel. This determination of the orientation of the second image retrieving module 11 with respect to the first image retrieving module 10 may be performed, for instance, by a calibration unit 21. Calibration unit 21 may be located in merging unit 20. For instance, calibration unit 21 may be a processor adapted to perform the above described processing of the image data in order to identify features in the image data and match the identified features. Further to this, such a calibration unit 21 may perform any additional steps for determining further calibration parameters. For example, additional intrinsic or extrinsic calibration parameters may be determined by calibration unit 21.

The determined calibration parameters may be stored in a memory 22. Memory 22 may be located in merging unit 20. It is also possible, that further calibration parameters, in particular additional intrinsic or extrinsic calibration parameters may be stored in memory 22, too.

Based on the determined calibration parameters which are determined by merging unit 20 and/or the calibration parameters stored in memory 22, merging unit 20 may merge the captured first image data provided by the first image retrieving module 10 and the second image data captured by the second image retrieving module 11. For this purpose, merging unit 20 may compute the relative deviation of the first image data provided by the first image retrieving module 10 and the second image data provided by the second image retrieving module 11 and combine the first image data and the second image data to a single common image. The image data of the single common image obtained by combining the first image data and the second image data can be output by a merging unit 20 for a further processing.

In order to obtain a compact design, the first image retrieving module 10, the second image retrieving module 11 and the merging unit 20 may be arranged in a common device housing 25. In this way, image capturing apparatus 1 can be considered as a single device such as a camera having an extended field of view. The resulting field of view corresponds to the field of view covered by all image retrieving modules 10 and 11 of the image capturing apparatus 1. As a resulting output of the image capturing apparatus 1, image data corresponding to a single image are output. Thus, the image data output by image capturing apparatus 1 may be used for a further processing without any additional computations in order to remove distortions caused by, for example, a fisheye optic. As the merging of the first image data provided by the first image retrieving module 10 and the second image data provided by the second image retrieving module 11 is performed automatically based on an analysis of the image data in the overlapping segment 2-3 of the first field of view 2-1 of the first image retrieving module 10 and the second field of view 2-2 of the second image retrieving module 11, no additional manual calibration and no complex additional computations have to be performed. Hence, image data of an extended field of view can be obtained in a convenient manner.

Additionally, it may be possible to analyze the first image data provided by the first image retrieving module 10 and the second image data provided by the second image retrieving module 11 in the overlapping segment 2-3 of the field of view in order to identify abnormalities in the image capturing apparatus 1. For example, a part of the first image data provided by the first image retrieving module 10 relating to the overlapping segment 2-3 of the field of view may be compared with a corresponding part of the second image data provided by the second image retrieving module 11 of the overlapping segment 2-3 of the field of view. A verification unit 23 may compare the image data provided by the first image retrieving module 10 and the second image data provided by the second image retrieving module 11. If the first image data and the second image data relating to the overlapping segment 2-3 of the field of view do not correspond, or if a deviation of more than a predetermined threshold is detected, an abnormality may be determined. In this case, an error signal may be output in order to indicate a problem in the image capturing apparatus 1.

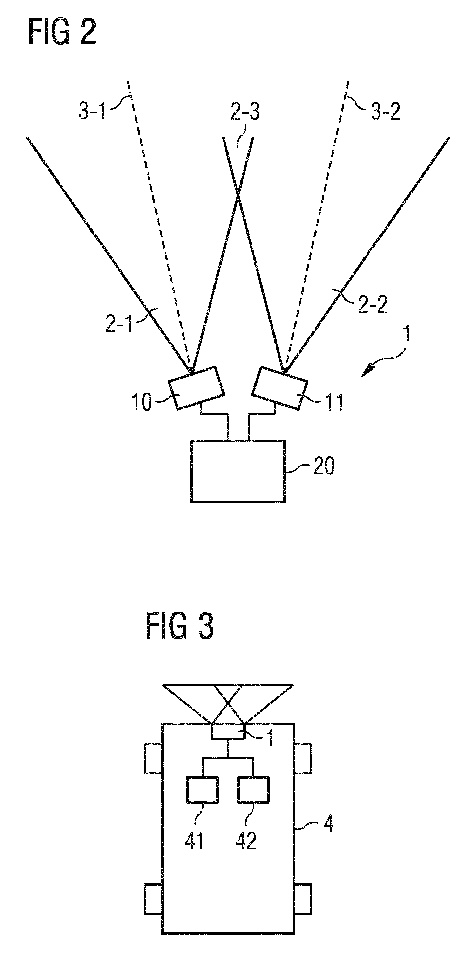

Figure 2 illustrates a further embodiment of an image capturing apparatus 1. The image capturing apparatus 1 of Figure 2 mainly corresponds to the image capturing apparatus 1 in Figure 1. While in Figure 1 the principal axis 3-1 of the first image retrieving module 10 and the second principal axis 3-2 of the second image retrieving module 11 intersects in front of the image retrieving modules 10 and 11, the first principal axis 3-1 of the first image retrieving module 10 and the second principal axis 3-2 of the second image retrieving module 11 intersects behind the first and the second image retrieving modules 10 and 11 in Figure 2. However, there is also an overlapping segment 2-3 of the first field of view 2-1 of the first image retrieving module 10 and the second field of view 2-2 of the second image retrieving module 11 in this configuration. Hence, merging unit 20 can also determine the calibration parameters. In particular, the orientation of the second image retrieving module 11 with respect to the first image retrieving module 10 based on the first image data and the second image data provided by the first image retrieving module 10 and the second image retrieving module 11 can be determined.

Figure 3 shows a schematic illustration of a vehicle 4 comprising an image capturing apparatus 1. For example, image capturing apparatus 1 may be arranged in the front part of vehicle 4 in order to obtain an extended front view. Depending on the individual field of view of the image retrieving modules 10 and 11 of the image capturing apparatus 1, the field of view of image capturing apparatus 1 can be extended up to 120 degrees. However, it may be also possible to extend the field of view up to 140 or even up to 180 degrees. For example, all image retrieving modules 10 and 11 may be mounted in such a manner that the image retrieving modules 10 and 11 have the same field of view in vertical direction. However, due to different orientation in horizontal direction, the individual image retrieving modules 10 and 11 may cover different fields of view in horizontal direction. Thus, the resulting field of view in horizontal direction may be extended. However, it may be also possible that the individual image retrieving modules 10 and 11 may have different vertical orientation in order to extend the vertical field of view of the image capturing apparatus 1.

The resulting image data of the common image which are output by image capturing apparatus 1 may be used for any further processing in vehicle 4. For instance, the image data of the common image may be displayed on a display 41 of vehicle 4. Additionally or alternatively, the image data of the common image may be also provided to an advanced driving assistance system 42 of vehicle 4.

Even though Figure 3 only shows an image capturing apparatus 1 in front of vehicle 4, it is also possible to arrange an image capturing apparatus 1 in the rear part of vehicle 4 in order to obtain a rear view. Further, it is also possible to arrange an image capturing apparatus 1 on the left and/or the right side of vehicle 4 in order to obtain an extended side view.

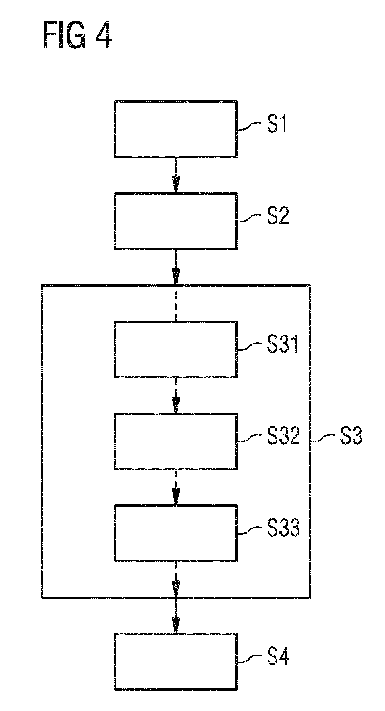

Figure 4 illustrates a flowchart underlying an image capturing method according to an embodiment. In step S1, first image data are captured by a first image retrieving module 10 having a first field of view 2-1. In step S2 second image data are captured by a second image retrieving module 11 having a second field of view 2-2. The second field of view 2-2 is different from the first field of view 2-1. However, the first field of view 2-1 and the second field of view 2-2 are partially overlapping in an overlapping segment 2-3. In step S3 an orientation of the second image retrieving module 11 is determined with respect to the first image retrieving module 10. The orientation may be determined based on the captured first image data and the captured second image data. In particular, the orientation may be determined based on the image data in the overlapping segment 2-3.

For example, determining a step S3 may comprise a step S31 for identifying a first feature in the first image data provided by the first image retrieving module 10. Next, in step S32 a second feature may be identified in the second image data provided by the second image retrieving module 11. In step S33 the first and the second feature may be matched. Based on the matched first and second feature, the orientation of the second image retrieving module 11 with respect to the first image retrieving module 10 can be computed.

Step S3 may also determine an angle between a first principal axis of the first image retrieving module 10 and a second principal axis of the second image retrieving module 11.

In step S4, the captured first image data and the captured second image data are merged to a common image. The merging may be performed based on the determined orientation of the second image retrieving module 11 with respect to a first image retrieving module 10. Additional calibration parameters in particular additional intrinsic or extrinsic calibration parameters of the individual image retrieving modules 10 and 11 may be used, too.

The image capturing method may further comprise a step for comparing image data of the first image data relating to an overlapping segment 2-3 with image data relating to the second image data of the overlapping segment 2-3. Based on this comparison in a further step an abnormality may be detected if the image data of the first image data relating to the overlapping segment do not correspond to the image data relating to the second image data of the overlapping segment, or the respective image data differ by more than a predetermined threshold value. In this case, a failure may be detected.

Summarizing, the present invention relates to an image capturing method and apparatus. Image data are captured by means of a plurality of image retrieving modules covering different fields of view. The image data of the individual image retrieving modules are merged by analyzing the overlapping portions of the individual fields of view. In this way, a reliable and efficient merging of image data can be performed in order to obtain a single image covering an extended field of view.

## Claims

1. An image capturing apparatus (10), comprising:
a first image retrieving module (11), adapted to provide first image data of a first field of view (2-1);
a second image retrieving module (12), adapted to provide second image data of a second field of view (2-2) which is different from the first field of view (2-1), wherein the first field of view (2-1) and the second field of view (2-2) are partially overlapping in an overlapping segment (2-3);
a merging unit (20), adapted determine an orientation of the second image retrieving module (11) with respect to the first image retrieving module (10) based on the captured first image data and the captured second image data in the overlapping segment (2-3), and to merge the captured first image data and the captured second image data to image data of a common image based on the determined orientation of the second image retrieving module (11) with respect to the first image retrieving module (10).

2. The image capturing apparatus (1) according to claim 1, wherein a field of view of the common image having an angle greater than 90 degrees.

3. The image capturing apparatus (1) according to claim 1 or 2, wherein the merging unit (20) further comprising a calibration unit (21) for determining calibration data comprising the orientation of the second image retrieving module (11) with respect to the first image retrieving module (10), and
a memory (22) for storing the calibration data,
wherein the merging unit (20) is adapted merge the first image data and the second image data based on the stored calibration data.

4. The image capturing apparatus (1) according to any of claims 1 to 3, further comprising a device housing (25), wherein the first image retrieving module (10), the second image retrieving module (11) and the merging unit (20) are arranged together in the device housing (25).

5. The image capturing apparatus (1) according to any of claims 1 to 4, wherein the first image retrieving module (10) and the second image retrieving module (11) having same imaging properties.

6. A vehicle (4) comprising the image capturing apparatus (1) according to any of claims 1 to 5.

7. The vehicle (4) according to claim 6, further comprising a display (41) adapted to display the common image.

8. The vehicle according to claim 6 or 7, further comprising an advanced driver assistance system (42), wherein the common image is provided to the advanced driver assistance system (42).

9. An image capturing method, comprising the steps of:
capturing (S1) first image data by a first image retrieving module (10) having a first field of view (2-1) ;
capturing (S2) second image data by a second image retrieving module (11) having a second field of view (2-2), which is different from the first field of view (2-1), wherein the first field of view (2-1) and the second field of view (2-2) are partially overlapping in an overlapping segment (2-3);
determining (S3) an orientation of the second image retrieving module (11) with respect to the first image retrieving module (10) based on the captured first image data and the captured second image data in the overlapping segment (2-3); and
merging (S4) the captured first image data and the captured second image data to image data of a common image based on the determined orientation of the second image retrieving module (11) with respect to the first image retrieving module (10).

10. The image capturing method according to claim 9, wherein the step (S3) for determining the orientation comprises the steps of:
identifying (S31) a first feature in the first image data;
identifying (S32) a second feature in the second image data; and
matching (S33) the first feature and the second feature.

11. The image capturing method according to claim 9 or 10, wherein the first image retrieving module (10) having a first principal axis (3-1) and the second image retrieving module (11) having a second principal axis (3-2); and
the step (S3) for determining the orientation comprises a step for determining an angle between the first principal axis (3-1) and the second principal axis (3-2).

12. The image capturing method according to any of claims 9 to 11, comparing image data of the first image data relating to the overlapping segment (2-3) with image data relating to the second image data of the overlapping segment (2-3);
detecting an abnormality if the image data of the first image data relating to the segment (2-3) do not correspond to the image data relating to the second image data of the overlapping segment (2-3).
